Europäisches Patentamt

European Patent Office

Office européen des brevets

(11) Veröffentlichungsnummer: **0 495 241 A2**

(12) **EUROPÄISCHE PATENTANMELDUNG**

(21) Anmeldenummer: **91122066.3**

(22) Anmeldetag: **21.12.91**

(51) Int. Cl.⁵: **G02B 6/44**

(30) Priorität: **16.01.91 DE 4101082**

(43) Veröffentlichungstag der Anmeldung:
**22.07.92 Patentblatt 92/30**

(84) Benannte Vertragsstaaten:
**CH ES FR GB IT LI NL**

(71) Anmelder: **Kromberg & Schubert**
**Spitzenstrasse 37**
**W-5600 Wuppertal 22(DE)**

(72) Erfinder: **Parmar, Daljit Singh, Dr. Ing.**
**Viereichenhöhe 4**
**W-4300 Essen 1(DE)**
Erfinder: **Dillge, Heimo, Dipl.-Ing.**
**Barloer Weg 28**
**W-4290 Bocholt(DE)**
Erfinder: **Wichmann, Helmut, Dipl.-Ing.**
**Stolbergstrasse 4**
**W-4408 Dülmen(DE)**
Erfinder: **Flinks, Norbert, Dipl.-Ing.**
**Burloerstrasse 27**
**W-4280 Borken(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) **Lichtwellen-Bändchenkabel sowie Verfahren und Vorrichtung zur Herstellung des Bändchenkabels.**

(57) Ein Lichtwellenleiter-Bändchenkabel besteht aus einer Schar miteinander verseilter Bündeladern (30) und einem diese gemeinsam umschließenden Mantel. Zum Aufbau einer Bündelader (30) wird ein Stapel aus parallelen Lichtwellenleiter-Bändchen (15) verwendet, die mit einer schlauchförmigen Umhüllung (31) versehen sind. Ein Bändchen (15) ist aus einer Anzahl linear nebeneinander liegender, miteinander verbundener Lichtwellenleiter-Fasern zusammengesetzt. Für eine gute Flexibilität und Raumersparnis wird vorgeschlagen, zwischen den einzelnen im Stapel übereinander liegenden Schichten (17 bis 17''') aus Lichtwellenleiter-Bändchen (15) eine Lage (21 bis 21''') eines Quellvlieses (20) anzuordnen. Diese Quellvlies-Lagen (21 bis 21''') durchlaufen den Stapel in Längsrichtung und bilden mit den Lichtwellenleiter-Bändchen (15) einen Schichtverbund (25),.

FIG. 3

Die Erfindung richtet sich zunächst auf einen Lichtwellenleiter in Form eines Bändchenkabels, das nachfolgend abgekürzt "LWL-Bändchenkabel" bezeichnet werden soll. Für den Ausbau eines Ortsnetzes werden hochfaserige LWL-Kabel benötigt, wozu sich die Bändchenkabeltechnologie besonders anbietet. Diese Kabel besitzen eine Schar miteinander verseilter Bündeladern, die von einem gemeinsamen Mantel umschlossen sind. Jede Bündelader umfaßt einen Stapel aus parallelen Lichtwellenleiter-Bändchen, die nachfolgend abgekürzt "LWL-Bändchen" bezeichnet werden sollen. Diese LWL-Bändchen sind in einer schlauchförmigen Umhüllung angeordnet. Jedes LWL-Bändchen ist aus einer Anzahl linear nebeneinanderliegender, miteinander verbundener Lichtwellenleiter-Fasern verbunden, die nachfolgend kurz "LWL-Fasern" genannt werden sollen.

Bei der bekannten Vorrichtung dieser Art wurden die LWL-Bändchen zu einem im Querschnitt rechteckigen Stapel miteinander verklebt und als Strang in ein gelgefülltes Röhrchen eingebracht. Dazu waren ein aufwendiges Fertigungsverfahren sowie kostspielige Spritzwerkzeuge erforderlich. Bei einer anderen Lösung verwendete man in einem Träger Nuten oder Hohlräume, in welchen die LWL-Bändchen eingelegt wurden. Hierdurch ergaben sich große Kabeldurchmesser, ein hohes Gewicht und vor allem eine mangelnde Flexibilität der Kabel. Die bekannten Lösungen waren umständlich in der Handhabung bei der Montage und Installation.

Der Erfindung liegt zunächst die Aufgabe zugrunde, ein leicht herzustellendes und bequem zu handhabendes, flexibles LWL-Bändchenkabel der im Oberbegriff des Anspruches 1 genannten Art zu entwickeln. Dies wird durch die im Kennzeichen des Anspruches 1 angegebenen Maßnahmen erreicht, deren Besonderheit darin liegt, daß die einzelnen LWL-Bändchen im Stapel nicht unmittelbar übereinander liegen, sondern durch ein dazwischengelegtes Quellvlies voneinander getrennt sind. Dieses Quellvlies läuft in Längsrichtung des Stapels hindurch. Diese Quellvlies-Lagen bilden zusammen mit dem LWL-Bändchen einen innigen Schichtverbund, der in dieser Kombination bei der weiteren Erstellung der Bündeladern als Baueinheit gehandhabt wird. Weitere Vorteile und Maßnahmen des erfindungsgemäßen Kabels ergeben sich aus den Unteransprüchen 2 bis 16, was anhand der Zeichnungen in der nachfolgenden Beschreibung näher erläutert sind.

Die Erfindung richtet sich aber auch auf ein Verfahren zur Herstellung eines solchen Bändchenkabels, wofür die in Anspruch 17 angegebenen Maßnahmen richtungsweisend sind. Weitere vorteilhafte Möglichkeiten dieses Verfahrens eröffnen sich durch die Unteransprüche 18 bis 24.

Schließlich richtet sich die Erfindung auch auf eine Vorrichtung zum Herstellen einer Bündelader für ein solches LWL-Bändchenkabel, deren wesentlicher Aufbau in Anspruch 25 angegeben und in der nachfolgenden Beschreibung anhand eines Ausführungsbeispiels näher erläutert ist. Die Unteransprüche 26 bis 32 richten sich dabei auf wertvolle Ausgestaltungen dieser Vorrichtung, denen jeweils eine besondere Bedeutung zukommt.

In den Zeichnungen ist die Erfindung in mehreren Ausführungsbeispielen dargestellt. Es zeigen:

Fig. 1
in starker Vergrößerung den Querschnitt durch eine LWL-Faser,

Fig. 2
in Vergrößerung den Querschnitt eines aus solchen Fasern erzeugten LWL-Bändchens,

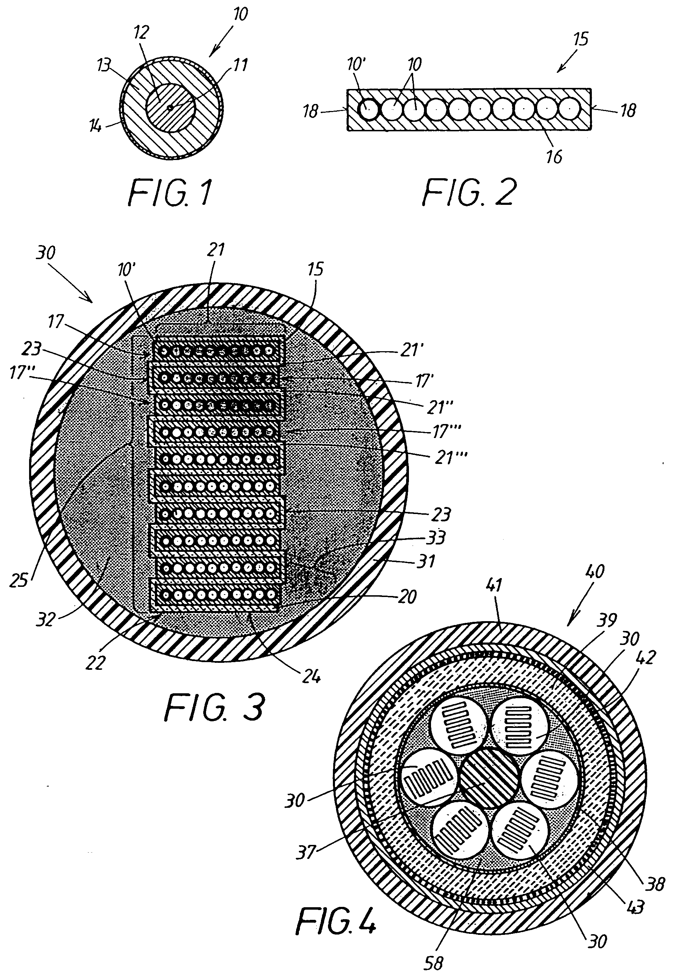

Fig. 3
in Vergrößerung einen Querschnitt durch eine aus den LWL-Bändchen von Fig. 2 erzeugte Bündelader,

Fig. 4
den Querschnitt durch ein LWL-Bändchenkabel, welches aus den LWL-Bändchen von Fig. 3 erzeugt ist,

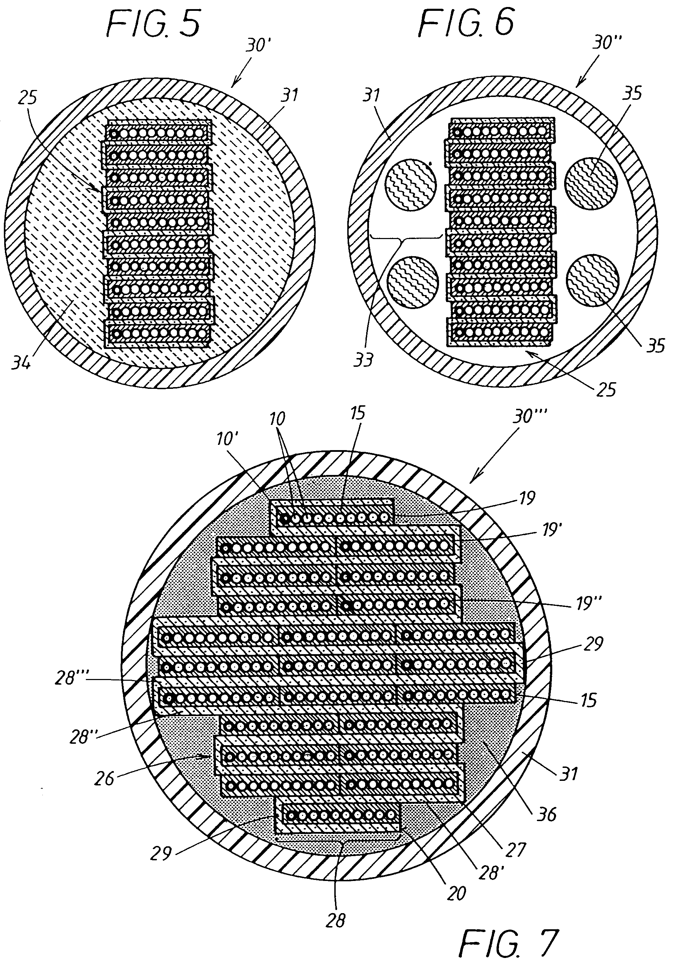

Fig. 5 6 und 7
in einer der Fig. 3 entsprechenden Darstellung Querschnitte durch drei alternative Ausführungsformen der Bündelader,

Fig. 8
schematisch die Draufsicht auf eine Vorrichtung zum Herstellen einer Bündelader für das LWL-Bändchenkabel und

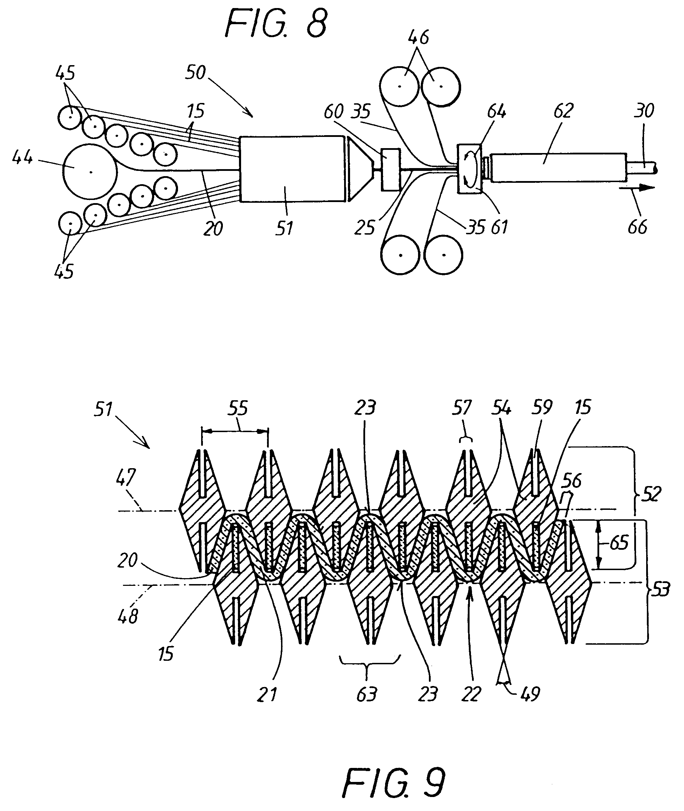

Fig. 9
schematisch im Querschnitt einen Bestandteil der Vorrichtung von Fig. 8.

Der Querschnitt von Fig. 1 zeigt eine LWL-Faser üblicher Art, deren Durchmesser nur 250 $\mu$ beträgt. Diese besteht aus einem Kern 11 aus Quarz, der den eigentlichen Lichtwellenleiter bildet mit einem Durchmesser von ca. 9 $\mu$. Der Kern 11 wird üblicherweise von einem primary coating und secondary coating 12, 13 umschlossen, die einen zueinander unterschiedlichen Brechungsindex aufweisen. Um dieses herum befindet sich ein protection coat aus einem ggf. einfärbbaren Lack, z. B. aus Acryl mit einer Stärke von ca. 10 $\mu$.

Aus solchen LWL-Fasern 10 wird nun ein LWL-Bändchen 15 gemäß Fig. 2 hergestellt. Dieses besteht aus zehn Fasern 10, die sich im Bändchen berühren können und gemeinsam von einem UV-vernetzten Harz, z. B. Acrylharz, umschlossen sind. Mindestens eine der LWL-Fasern 10' im Bändchen 15 ist farbig bzw. farbunterschiedlich gegenüber den übrigen Fasern 10 ausgebildet und dient als Kennfaser beim Zählen der Fasern im Bändchen 15. Zweckmäßigerweise ordnet man diese Kennfaser 10' an der Kante 18 an. Das LWL-Bändchen 15 besitzt eine Breite von ca. 3 mm und eine Dicke von etwa 0,3 mm.

Mehrere solcher LWL-Bändchen 15 werden zu einem Stapel übereinander gelegt, was aber in besonderer Weise geschieht. In Fig. 3 liegen die einzelnen Schichten 17, 17', 17'', 17''' dieser LWL-Bändchen nicht unmittelbar übereinander, vielmehr befindet sich, mindestens stellenweise, zwischen ihnen eine Lage 21', 21'', 21''' aus Quellvlies 20. Hierzu dient im vorliegenden Fall ein gemeinsamer Quellvlies-Streifen 20. Die Zwischen-Lagen 21' bis 21''' und eine Endlage 21 werden hier durch eine V-förmige Faltung des fortlaufenden Streifens 20, der dadurch zu einem Faltenstreifen 22 wird. Die einzelnen Lagen werden somit durch die Faltenschenkel des Faltenstreifens 22 erzeugt. Der Faltenstreifen 22 hat einen zieharmonika-artigen Verlauf in Form einer in Streifen-Querrichtung verlaufenden Z-Faltung, die man auch als "Leporello-Faltung" bezeichnet. In diesem Ausführungsbeispiel sind die aufeinanderfolgenden Schichten 17 bis 17''' durch benachbarte Faltenschenkel 21 bis 21''' voneinander getrennt. Die Knickscheitel 23 des Faltenstreifens 22 liegen wechselständig auf einander gegenüberliegenden Seiten. Ihre konkave Innenfläche dient dabei als Anschlag für die linke bzw. rechte Kante 18 des LWL-Bändchens 15. Diese Bändchen-Schichten 17 bis 17''' mit den dazwischen liegenden Quellvlies-Lagen 21 bis 21''' sind zu einem innigen Schichtverbund 25 zusammengedrückt, der dann eine als ganzes zu handhabende Baueinheit bildet. Wegen der im Verbund wirksamen Falten soll dieses Gebilde "Faltschichtverbund" 25 bezeichnet werden. Die Lagesicherung innerhalb dieses Schichtverbunds ist zunächst durch die erwähnte Anschlagwirkung im Knickscheitel 23 erreicht. Zur ergänzenden Lagesicherung im Schichtverbund 25 könnte das Quellvlies mit einem Haftkleber versehen sein. Die Quellvlies-Lagen 21 bis 21''' bewirken eine ideale Längswasserdichtigkeit bereits innerhalb des Faltschichtverbunds 25 und tragen maßgeblich zu seiner Stabilität bei. Diese Lagen 21 bis 21''' wirken ferner als Ordnungselement im Verbund 25.

Im vorliegenden Fall ist in jeder Schicht 17 bis 17''' des Faltschichtverbunds 25 nur ein einziges LWL-Bändchen 15 vorgesehen und man verwendet zehn solcher Schichten 17 bis 17'''. Jedes dieser Bändchen 15 kann schichtweise eine andere Farbe an seiner vorzugsweise stets an der Kante liegenden Kennfaser 10' aufweisen, während die übrigen Fasern 10 mit einem klaren Lack versehen sind. Zur Unterscheidung könnten die einzelnen Bändchen 15 zusätzlich oder ergänzend mit aufgedruckten Zahlen versehen sein, die eine Unterscheidung ermöglichen. Der Faltschichtverbund 25 hat, wie aus dem Kernbereich von Fig. 3 hervorgeht, im Querschnitt gesehen, einen Rechteckumriß 25 und dient zum Aufbau einer Bündelader 30, welche ein Grundelement des schließlich in Fig. 4 gezeigten LWL-Bändchenkabels 40 bildet. Die Bündelader wird mit einer schlauchförmigen Umhüllung 31 versehen, die z. B. aus Polyamid besteht. Eine andere Alternative bestünde darin, hierfür Polybutylentherephtalat (PBTP) zu verwenden. In der Bündelader 30 befindet sich der Faltschichtverbund 25 im Kernbereich, während die sie umgebende Ringzone 33 bis zur Umhüllung 31 hin mit einem Füllmaterial 32 versehen ist. Als Füllmaterial eignen sich verschiedene Werkstoffe, wie anhand der Fig. 3, 5 und 6 näher erläutert ist. Um eine gute Biegsamkeit einer solchen Bündelader 30 in allen Richtungen zu ermöglichen und diese möglichst allseitig gleichförmig zu machen, wird der Schichtverbund 25 in der Bündelader 30 SZ-verseilt. Das bedeutet, daß der Faltschichtverbund 25 abwechselnd einmal links herum und einmal rechts herum in sich verschraubt ist.

Im Ausführungsbeispiel von Fig. 3 besteht das Füllmaterial 32 aus einem thixotropen Gel. Die in Fig. 5 und 6 gezeigte Bündelader 30' hat einen mit Fig. 3 vergleichbaren Aufbau, weshalb insoweit die bisherige Beschreibung gilt. Es genügt auf die Unterschiede einzugehen.

In Fig. 5 sind als Füllmaterial Elemente 34 aus Glas und/oder Aramid verwendet. Sie sind besonders zugfest und haben eine geringe Dehnung. Glas und Aramid können dabei auch im Gemisch verwendet werden. Im Ausführungsbeispiel von Fig. 6 sind im Inneren der schlauchförmigen Umhüllung 31 vier Stränge 35 aus quellfähigem Garn verwendet. Der übrige Bereich im Abstandraum 33 bleibt zunächst unausgefüllt, wird aber beim Aufquellen der Stränge 35 von diesen vollflächig ausgefüllt.

Die in Fig. 7 gezeigte Bündelader 30''' zeigt einen Schichtverbund 26 mit ungleichförmigem Umriß, der den verfügbaren Querschnitt innerhalb der schlauchförmigen Umhüllung 31 weitgehend ausfüllt. Dies könnte dadurch verwirklicht sein, daß man für die einzelnen Bändchen-Schichten 19, 19', 19'' eine unterschiedliche Anzahl von Fasern 10 in den zugehörigen Bändchen 15 verwendet. Günstiger ist es, wie im dargestellten Ausführungsbeispiel von Fig. 7, von einer einheitlichen Sorte von LWL-Bändchen 15 auszugehen, wie sie bereits im Zusammenhang mit Fig. 2 näher beschrieben worden ist. Stattdessen wird die Anzahl der Bändchen, entsprechend der verfügbaren Innenweite, in den verschiedenen Schichten 19 bis 19'' unterschiedlich gewählt. Wie ersichtlich, gibt es Schichten 19 mit nur einem einzigen Bändchen 15, dann mehrere aufeinanderfolgende Schichten 19' mit zwei Bändchen und schließlich auch drei Bändchen 15 umfassende Schichten 19''. Auch im vorliegenden Fall verwendet man einen mäanderförmig verformten Faltenstreifen 27 aus Quellvlies 20, dessen Faltschenkel wie aus 28, 28', 28'' und 28''' ersichtlich, eine zueinander unterschiedliche Breite aufweisen. Die Knickstellen 29 liegen wie in den vorausgehenden Ausführungsbeispielen, abwechselnd auf gegenüberliegenden Seiten dieses Faltschichtverbunds 25.

Um in der Bündelader 30''' die Fasern aus den benachbarten Bändchen besser unterscheiden zu können, werden auch hier farbige Kennfasern 10' verwendet, die aber bändchenweise hinsichtlich ihrer Kennfaser-Farbe zueinander unterschiedlich ausgebildet sind. Eine weitere Möglichkeit bestände darin, die Anzahl dieser Kennfasern 10' bändchenweise zueinander unterschiedlich zu machen. Der verbleibende kleine Zwischenraum 36 in der Bündelader 30''' wird mit Füllmaterial ausgefüllt.

Wie Fig. 4 verdeutlicht, besteht ein komplettes LWL-Bändchenkabel 40 aus einer Schar von derartigen Bündeladern 30, die miteinander verseilt sind und von einem gemeinsamen Mantel 41 umschlossen werden. Im Kernbereich des Kabels 40 befindet sich ein Stützelement 37 aus glasfaserverstärktem Kunststoff. Um dieses Stützelement 37 herum sind die Bündeladern 30 vorzugsweise gleichförmig verteilt. Um die miteinander verseilten Adern 30 wird eine Schicht 38 aus Quellband gelegt, welcher sich eine Zugentlastungs-Schicht 39 aus einem Gemisch von Aramid und Glas anschließt. Dann folgt ein sogenannter "Schichtenmantel". Dieser besteht aus einem Schmelzkleber, wie Polyamid 42, der mit der Schicht 39 bindungswirksam ist. Dann folgt, als Wasserdampfsperre, eine Bewicklung 43 aus einem Aluminiumband, welches kunststoffbeschichtet ist und sich beim Wickeln mit den Randbereichen seiner Windungen überlappt. Dann folgt der Kunststoffmantel aus Polyäthylen 41. Zur Unterscheidung der einzelnen Bündeladern 30 werden diese zueinander farblich abgesetzt. Es genügt bereits lediglich ein Bündel davon farblich oder beschriftungsmäßig gegenüber den anderen abzusetzen, welches dann als Kennbündel bei der Zählung der Bündel im Kabel 40 dienlich ist. Die Zwickel zwichen den einzelnen Bündeln 30 sind, wie durch die Punktung bei 58 verdeutlicht ist, mit Petrolat ausgefüllt.

Das Verfahren zur Herstellung der erfindungsgemäßen Bündelader wid nunr anhand einer in Fig. 8 als ganzes und in Fig. 9 im Detail gezeigten Vorrichtung 50 erklärbar. Die Vorrichtung 50 umfaßt als wesentlichen Teil eine in Fig. 8 schematisch angedeutete Falteinrichtung 51, welcher eingangsseitig die zu ihrem Aufbau benötigten Materialien zugeführt werden, nämlich ein Quellvlies 20 und zehn LWL-Bändchen 15. Der Quellvlies wird von einem Wickel 44 in Form eines fortlaufenden Streifens 20 abgezogen, während die Bändchen 15 auf Spulen 45 bevorratet sind. Die Falteinrichtung 51 umfaßt, wie ein schematischer Querschnitt in Fig. 9 zeigt, einen oberen und einen unteren Satz 52, 53 von Kegelrädern 54. Diese sind in einem Abstand 55 voneinander angeordnet und stehen zueinander auf Lücke, so daß zwischen dem oberen und unteren Satz 52, 53 ein mäanderförmiger Spalt 56 entsteht. Dieser Spalt 56 dient zum Durchführen des Quellvlies-Streifens 20. Die Kegelräder verjüngen sich zu ihrem Radumfang 57 hin und besitzen dort eine umlaufende Umfangsnut 59, die den gegebenen Kegelwinkel 49 etwa längsmittig halbiert und zur Führung mindestens eines einlaufenden LWL-Bändchen 15 dient. In diesem Fall sind die Kegelräder 54 der beiden Sätze 52, 53 zueinander formgleich ausgebildet sowie mit den strichpunktiert angedeuteten Achsen 47, 48 miteinander ausgerichtet. Die Achsen 47, 48 verlaufen zueinander parallel.

In dem mäanderförmigen Spalt 56 zwischen den Kegelrad-Sätzen 52, 53 kommt es nun zu der in Fig. 9 verdeutlichten Z-Faltung des Quellvlieses, das dort bereits eine Vorform des beschriebenen Faltenstreifens 22 einnimmt. Die Knickscheitel 23 entstehen zwischen benachbarten Kegelrädem 57 der oberen und unteren Reihe. In diesem Fall liegt über die ganze Breite des Faltstreifens 22 die gleiche Falttiefe 65 vor. Durch ein am Ausgang der Vorrichtung 50 vorgesehenes Abzugswerk wird für einen Einzug der erwähnten Materialien 15, 20 in die Falteinrichtung 51 gesorgt. Die Kegelräder 57 werden in diesem Fall einfach durch Friktion über den längsbewegten Quellvliesstreifen 20 in Drehung versetzt. Alternativ wäre es aber auch möglich, die Kegelräder 54 synchron mit einem nachgeschalteten Abzugswerk 60 anzutreiben. Über das Abzugswerk werden schließlich der vorgefaltete Faltenstreifen 22 mit den faltenweise eingezogenen LWL-Bändchen 15 zusammengedrückt zu dem bereits beschriebenen Faltenschichtverbund 25. Zwischen der Falteinrichtung 51 und dem Extruder 62 ist eine Verseileinrichtung 60, 61 angeordnet, die aus einem feststehenden Führungsteil 60 und einem oszillierend, im Sinne des Doppelpfeils 64, hin- und herbeweglichen Verseilungsteil 61 besteht. Dadurch wird der Faltschichtverbund 25 SZ-verseilt, also abwechselnd im Sinne einer rechts- und linksgängigen Schraube. Die Transportrichtung ist durch einen Pfeil 66 verdeutlicht. Eine Alternative dazu bestände darin, bereits die beiden Kegelrad-Sätze 52, 53 um eine Längsachse des einlaufenden, zu faltenden Streifens 20 oszillierend hin- und herzubewegen. Die Drehung bei der SZ-Verseilung erfolgt oszillierend bis zu einem Winkel von 360°.

Dann gelangt der Faltschichtverbund 25 in einen Extruder 62, wo er mit der bereits beschriebenen Umhüllung 31 versehen wird. Dabei werden die entstehenden Hohlräume ganz oder wenigstens teilweise ausgefüllt. Im vorliegenden Fall verwendet man dazu den in Fig. 6 beschriebenen Querschnittaufbau, weshalb in den Extruder 62 zugleich Stränge 35 aus quellfähigem Garn mit einlaufen, die von vier Wickeln 46 abgezogen werden. Wie aus Fig. 8 ersichtlich, besteht die Besonderheit der Erfindung darin, daß die Bündelader 30, ausgehend von den Roh-Materialien 20, 15 in fortlaufenden, zusammenhängenden Arbeitsgängen im einem Zug hergestellt wird.

Der im Zusammenhang mit Fig. 9 beschriebene Faltvorgang kann in verschiedener Weise modifiziert werden. Die Faltung kann stufenweise erfolgen durch eine Vorfaltung und eine Nachfaltung. Zwischen den einzelnen Faltstufen werden erst die LWL-Bändchen 15 eingeführt. Entgegen dem dargestellten Ausführungsbeispiel können in einer Umfangsnut 59 mehr als nur ein LWL-Bändchen 15 angeordnet sein, nämlich dann, wenn man den in Fig. 7 gezeigten komplexen Faltschichtverbund 26 als Endprodukt erhalten will. Hier ist die größere Faltentiefe in der mittleren Zone des Streifens beachtenswert. Daher wird man den Streifen 20 hier zur Streifenmitte hin in seiner Faltentiefe 28 zunehmend verformen. Dies kann z. B. dadurch geschehen, daß man die einzelnen Längszonen im Streifen zueinander zeitlich versetzt faltet, also die mittlere Längszone im Streifen zuerst faltet und dann erst, mit entsprechender Verzögerung, die zum Rand hin liegenden Längszonen nachfaltet. Konstruktionsmäßig kann man dabei bei den Kegelrad-Sätzen 52, 53 von Kegelrädern 54 mit zueinander unterschiedlichem Rad-Durchmesser ausgehen. Man könnte auch den Quellvlies-Streifen 20 in mehrere Teilbänder aufgliedern. Bei unterschiedlichem Rad-Durchmesser wird man zur Mitte 63 der beiden Radsätze 52, 53 hin einen zunehmenden Rad-Durchmesser wählen. Dann sind die beschriebenen Drehachsen eines Rad-Satzes 52, 53 zueinander höhenversetzt. Aus Platzgründen wird man dann auch die Kegelräder 54, in Transportrichtung 66 des Quellvlies-Streifens 20 von Fig. 8 gesehen, zueinander versetzen.

Der Faltenverlauf in einem solchen Quellvlies-Streifen 20 braucht nicht zieharmonika-artig erfolgen, vielmehr könnte auch eine labyrinthförmige Faltenlegung zwischen den einzelnen LWL-Bändchen 15 vorgesehen sein, die wie eine Verpackung eines Pakets die Bändchen umschließt. Es ist auch nicht erforderlich, in jedem Fall einen durchgehenden Quellvlies-Streifen 20 zu verwenden, vielmehr könnte dieser aus einzelnen Abschnitten oder einzelnen Teilstreifen zusammengesetzt sein.

Bezugszeichenliste:

| 10, 10' | LWL-Faser |
| 11 | Kern |
| 12 | primary coating |
| 13 | secondary coating |
| 14 | protection coating |
| 15 | LWL-Bändchen |
| 16 | Acrylharz von 15 |
| 17 bis 17''' | Schichten aus 15 |
| 18 | Kante von 15 |
| 19 bis 19'' | Bändchen-Schichten bei 30''' |
| 20 | Quellvlies, Quellvliesstreifen |
| 21 bis 21''' | Vlieslage, Faltenschenkel |
| 22 | Faltenstreifen |
| 23 | Knickscheitel von 22 |
| 24 | Rechteckumrißprofil von 25 |
| 25 | Faltschichtverbund für 30 bis 30'' |
| 26 | Faltschichtverbund für 30''' |
| 27 | Faltenstreifen für 30''' |
| 28 bis 28''' | Faltenschenkel von 27 |
| 29 | Knickscheitel von 27 |
| 30 bis 30''' | Bündelader |
| 31 | schlauchförmige Umhüllung |
| 32 | Füllmaterial, Gel |
| 33 | Hohlraum, Ringzone |
| 34 | Füllmaterial, Glas-Aramid |
| 35 | Strang |
| 36 | Zwischenraum |
| 37 | Stützelement von 40 |
| 38 | Quellband-Schicht in 40 |
| 39 | Zugentlastungs-Schicht von 40 |
| 40 | LWL-Bändchenkabel |
| 41 | Mantel von 40 |
| 42 | Schmelzkleber in 40 |
| 43 | Alu-Band-Bewicklung |
| 44 | Wickel für 20 |
| 45 | Spule für 15 |
| 46 | Wickel für 35 |
| 47 | Achse von 52 |
| 48 | Achse von 53 |
| 49 | Kegelwinkel von 54 |
| 50 | Vorrichtung |
| 51 | Falteinrichtung |
| 52 | oberer Satz von 54 |
| 53 | unterer Satz von 54 |
| 54 | Kegelrad |
| 55 | Abstand zwischen 54 |
| 56 | mäanderförmiger Spalt zwischen 52, 53 |
| 57 | Radumfang |
| 58 | Petrolat-Füllung (Fig. 4) |
| 59 | Umfangsnut |
| 60 | Verseileinrichtung, Führungsteil |
| 61 | Verseileinrichtung, Verseilungsteil |
| 62 | Extruder |
| 63 | Radsatz-Mitte |
| 64 | Oszillationspfeil für 61 |
| 65 | Falttiefe von 22 |
| 66 | Transportrichtung |

**Patentansprüche**

1. Lichtwellenleiter-Bändchenkabel (LWL-Bändchenkabel 40), bestehend aus einer Schar miteinander verseilter Bündeladern (30) und einem diese gemeinsam umschließenden Mantel (41),

wobei eine Bündelader (30) einen Stapel aus parallelen Lichtwellenleiter-Bändchen(LWL-Bändchen 15) in einer schlauchörmigen Umhüllung (31) aufweist,

und ein LWL-Bändchen (15) vormontiert ist aus einer Anzahl linear nebeneinander liegender, miteinander verbundener LWL-Fasern (10),

**dadurch gekennzeichnet,**

daß zwischen den einzelnen, im Stapel übereinanderliegenden Schichten (17 bis 17''') aus LWL-Bändchen (15) eine Lage (21 bis 21''') aus Quellvlies (20) angeordnet ist,

die Lagen (21 bis 21''') in Längsrichtung des Stapels durchlaufen und mit den LWL-Bändchen (15) einen Schichtverbund (25) bilden, (vergl. Fig. 3, 4).

2. Kabel nach Anspruch 1, dadurch gekennzeichnet, daß die Quellvlies-Lagen (21 bis 21''') mit einem Haftkleber versehen sind.

3. Kabel nach Anspruch 1 oder 2, dadurch gekennzeichnet, daß wenigstens zwei Quellvlies-Lagen des Schichtverbunds (25) aus den Faltenschenkeln (21, 21') eines gemeinsamen V-förmig quergefalteten Streifens (Faltenstreifens 22) erzeugt sind und mit den LWL-Bändchen (15) des Stapels einen Faltschichtverbund (25) bilden.

4. Kabel nach Anspruch 3, dadurch gekennzeichnet, daß der Faltenstreifen (22) eine zieharmonika-artige fortlaufende Z-Faltung (Leporello-Faltung) aufweist.

5. Kabel nach Anspruch 3 oder 4, dadurch gekennzeichnet, daß aufeinanderfolgende Schichten (17 bis 17''') aus LWL-Bändchen (15) im Faltschichtverbund (25) durch benachbarte Faltenschenkel (21 bis 21''') voneinander getrennt sind.

6. Kabel nach einem oder mehreren der Ansprüche 3 bis 5, dadurch gekennzeichnet, daß der konkave Innenknickscheitel (23) des Faltstreifens (22) als Anschlag für die Kante (18) eines LWL-Bändchens (15) dient.

7. Kabel nach einem oder mehreren der Ansprüche 1 bis 5, dadurch gekennzeichnet, daß in jeder Schicht (17 bis 17''') des Verbunds (25) nur ein LWL-Bändchen (15) angeordnet ist.

8. Kabel nach Anspruch 7, dadurch gekennzeichnet, daß die LWL-Bändchen (15) im Faltenstreifen (22) fluchtend übereinandergeschichtet sind und einen Faltschichtverbund mit einem Rechteckprofil (24) im Querschnitt bilden.

9. Kabel nach einem oder mehreren der Ansprüche 1 bis 8, dadurch gekennzeichnet, daß der Verbund (26) schichtweise (19 bis 19'') eine unterschiedliche Anzahl von LWL-Bändchen (15) aufweist, (vergl. Fig. 7).

10. Kabel nach Anspruch 9, dadurch gekennzeichnet, daß im Verbund die Bändchenzahl je Schicht (19 bis 19'') und/oder die Faserzahl je Bändchen (15) dem verfügbaren Querschnitt (36) innerhalb der Umhüllung (31) der Bündelader (30''') angepaßt sind, (vergl. Fig. 7).

11. Kabel nach einem oder mehreren der Ansprüche 1 bis 10, dadurch gekennzeichnet, daß die in einer Schicht (19 bis 19'') des Verbunds (26) nebeneinander liegenden LWL-Bändchen (15) Kennfasern (10') aufweisen, die hinsichtlich ihrer Kennfaseranzahl und/oder Kennfaser-Farbe zueinander unterschiedlich ausgebildet sind.

12. Kabel nach einem oder mehreren der Ansprüche 1 bis 11, dadurch gekennzeichnet, daß der Faltschichtverbund (25) in der Bündelader (30) SZ-verseilt ist.

13. Kabel nach einem oder mehreren der Ansprüche 1 bis 12, dadurch gekennzeichnet, daß der Verbund (25) im mittleren Bereich der Bündelader (30) angeordnet ist und der zwischen dem Verbund (25) und der schlauchförmigen Umhüllung (31) befindliche Abstandsraum (33) ganz oder teilweise mit Füllmaterial (32) ausgefüllt ist.

14. Kabel nach Anspruch 13, dadurch gekennzeichnet, daß das Füllmaterial ein thixotropes Gel (32) ist, (vergl. Fig. 3).

15. Kabel nach Anspruch 13 oder 14, dadurch gekennzeichnet, daß das Füllmaterial aus Glas und/oder Aramid (34) besteht, (vergl. Fig. 5).

16. Kabel nach einem oder mehreren der Ansprüche 13 bis 15, dadurch gekennzeichnet, daß das Füllmaterial aus einem oder mehreren Strängen (35) quellfähigen Garnes besteht, (vergl. Fig. 6).

17. Verfahren zur Herstellung eines Bändchenkabels (40) nach einem oder mehreren der Ansprüche 1 bis 16,

indem LWL-Bändchen (15) zunächst stapelweise zusammengefaßt von einer Umhüllung (31) umschlossen werden und eine Bündelader (30) bilden,

dann mehrere Bündeladern (30) verseilt und von einem Mantel (41) gemeinsam umhüllt werden,

**dadurch gekennzeichnet,**

daß zunächst zwischen zwei benachbarten Schichten (17 bis 17''') aus LWL-Bändchen (15) des Stapels jeweils eine Lage (21 bis 21''') aus Quellvlies (20) eingeführt wird,

dann die Bändchen-Schichten (17 bis 17''') mit den dazwischen liegenden Quellvlies-Lagen (21 bis 21''') zu einem Schichtverbund (25) zusammengedrückt werden

und schließlich um den Schichtverbund (25) die Umhüllung (31) der Bündelader (30) extrudiert wird, (vergl. Fig. 8).

18. Verfahren nach Anspruch 17, dadurch gekennzeichnet, daß mindestens ein Streifen aus Quellvlies (20) zunächst in Querrichtung des Streifens mindestens V-förmig gefaltet wird, dessen Faltschenkel (21 bis 21''') benachbarte Quellschichtlagen bildet, und dabei in eine Falte wenigstens ein LWL-Bändchen (15) des Stapels eingeführt wird,

wonach die mit dem LWL-Bändchen (15) gefüllte Falte zu einem Faltschichtverbund (25) zusammengedrückt wird.

19. Verfahren nach Anspruch 18, dadurch gekennzeichnet, daß ein Streifen aus Quellvlies (20) zieharmonika-artig in Z-Falten gelegt und dabei zwischen benachbarte Faltenlagen wenigstens jeweils ein LWL-Bändchen (15) des Stapels eingeführt wird.

20. Verfahren nach Anspruch 18 oder 19, dadurch gekennzeichnet, daß vor dem Extrudieren der Umhüllung der Verbund (25) längsbewegt und gleichzeitig um seine Längsachse oszillierend (64) hin- und herbewegt wird und in der Bündelader (30) eine SZ-Verseilung erzeugt.

21. Verfahren nach einem oder mehreren der Ansprüche 17 bis 20, dadurch gekennzeichnet, daß in einem einzigen Arbeitsgang der Quellvlies-Streifen (20) gefaltet wird, die LWL-Bändchen (15) in die Falten eingeführt werden, der Verbund (25) SZ-verseilt wird und beim Extrudieren (62) der Umhüllung (31) die Hohlräume (33) ganz oder teilweise ausgefüllt (32; 34; 35) werden.

22. Verfahren nach Anspruch 21, dadurch gekennzeichnet, daß der Streifen (20) vorgefaltet und dann ggf. nachgefaltet wird, bevor die LWL-Bändchen (15) eingeführt werden.

23. Verfahren nach Anspruch 22, dadurch gekennzeichnet, daß die mittlere Längszone im Streifen (20) zuerst gefaltet wird und dann erst die zum Rand hin liegenden Längszonen des Streifens (20) mit entsprechender zeitlicher Verzögerung gefaltet werden.

24. Verfahren nach einem oder mehreren der Ansprüche 17 bis 23, dadurch gekennzeichnet, daß der Streifen (20) in mehreren aufeinanderfolgenden Schritten in seiner Faltentiefe (65) zunehmend verformt wird.

25. Vorrichtung (50) zum Herstellen einer Bündelader (30) für das LWL-Bändchenkabel (40) nach einem oder mehreren der Ansprüche 1 bis 16,

**gekennzeichnet durch**

einen oberen und einen unteren Satz (52, 53) von Kegelrädern (54), die zueinander auf Lücke (55) stehen und zwischen sich einen mäanderförmigen Spalt (56) zum Transport eines Streifens aus Quellvlies-Material (20) einschließen,

die Kegelräder (54) zu ihrem Radumfang (57) hin sich verjüngen (49) und wenigstens eine Umfangsnut (59) aufweisen, die als Führungsnut zum Einlauf von mindestens einem LWL-Bändchen (15) dient, (vergl. Fig. 9).

26. Vorrichtung nach Anspruch 25, dadurch gekennzeichnet, daß die Kegelräder (54) durch Friktion über den längsbewegten Quellvlies-Streifen (20) drehbar sind.

27. Vorrichtung nach Anspruch 25 oder 26, dadurch gekennzeichnet, daß die Kegelräder (54) synchron mit dem Extruderabzug (62) drehangetrieben sind.

28. Vorrichtung nach einem oder mehreren der Ansprüche 25 bis 27, dadurch gekennzeichnet, daß die Kegelräder (54) eines Satzes (52, 53) einen zueinander unterschiedlichen Rad-Durchmesser aufweisen und damit ein oder mehrere Bändchen (15) aufnehmen.

29. Vorrichtung nach einem oder mehreren der Ansprüche 25 bis 28, dadurch gekennzeichnet, daß die Rad-Durchmesser zur Mitte (63) des Radsatzes (52, 53) hin zunehmen.

30. Vorrichtung nach einem oder mehreren der Ansprüche 25 bis 29, dadurch gekennzeichnet, daß - in Transportrichtung (66) des Quellvlies-Streifens (20) gesehen, die Kegelräder (54) des oberen und unteren Satzes (52, 53) gruppenweise in Längsrichtung zueinander versetzt angeordnet sind.

31. Vorrichtung nach einem oder mehreren der Ansprüche 25 bis 30, dadurch gekennzeichnet, daß zwischen den beiden Kegelradsätzen (52, 53) einerseits und einem die Umhüllung (31) der Bündelader erzeugenden Extruder (62) andererseits eine SZ-Verseileinrichtung (60, 61) angeordnet ist, (vergl. Fig. 8).

32. Vorrichtung nach einem oder mehreren der Ansprüche 25 bis 31, dadurch gekennzeichnet, daß für eine SZ-Verseilung des Verbundes (25) in der Bündelader (30) die beiden Kegelrad-Sätze (52, 53) um eine Längsachse des einlaufenden, zu faltenden Streifens (20) oszillierend hin- und herbeweglich sind.

FIG. 1

FIG. 2

FIG. 3

FIG. 4

*FIG. 5*

*FIG. 6*

*FIG. 7*

## FIG. 8

## FIG. 9